(19) Europäisches Patentamt
European Patent Office
Office européen des brevets

(11) EP 4 006 103 B1

(12) **EUROPEAN PATENT SPECIFICATION**

(45) Date of publication and mention of the grant of the patent:
**05.11.2025 Bulletin 2025/45**

(21) Application number: **20844684.9**

(22) Date of filing: **20.07.2020**

(51) International Patent Classification (IPC):
***C08L 67/02*** (2006.01) ***C08L 69/00*** (2006.01)
***C08L 33/20*** (2006.01) ***C08L 35/06*** (2006.01)
***C08L 63/00*** (2006.01) ***B29C 65/16*** (2006.01)

(52) Cooperative Patent Classification (CPC):
(C-Sets available)
**C08G 59/62; B29C 65/1616; B29C 65/1635; B29C 66/71; B29C 66/7392; C08K 3/346; C08K 5/20; C08K 5/521; C08K 7/14; C08L 67/02;**
B29K 2995/0027 (Cont.)

(86) International application number:
**PCT/CN2020/102916**

(87) International publication number:
**WO 2021/013115 (28.01.2021 Gazette 2021/04)**

(54) **POLYESTER RESIN COMPOSITION AND MOLDED PRODUCT THEREOF**

POLYESTERHARZZUSAMMENSETZUNG UND FORMARTIKEL DARAUS

COMPOSITION DE RÉSINE DE POLYESTER ET PRODUIT MOULÉ ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.07.2019 CN 201910660370**

(43) Date of publication of application:
**01.06.2022 Bulletin 2022/22**

(73) Proprietor: **Toray Industries, Inc.**
**Tokyo 103-8666 (JP)**

(72) Inventors:
- **TANG, Xianwen**
  **Shanghai 200241 (CN)**
- **XU, Junrui**
  **Shanghai 200241 (CN)**
- **ZHANG, Lezhen**
  **Shanghai 200241 (CN)**
- **KATO, Koya**
  **Shanghai 200241 (CN)**
- **OTA, Kenji**
  **Nagoya, Aichi 455-8502 (JP)**
- **OMAYU, Akitoshi**
  **Suzhou, Jiangsu 215164 (CN)**
- **ZHU, Wenbo**
  **Suzhou, Jiangsu 215164 (CN)**

(74) Representative: **Mewburn Ellis LLP**
**Aurora Building**
**Counterslip**
**Bristol BS1 6BX (GB)**

(56) References cited:
**CN-A- 107 778 792** **CN-A- 107 778 792**
**JP-A- 2003 213 106** **JP-A- 2010 024 396**
**JP-A- 2010 024 396** **JP-A- 2010 070 626**
**JP-A- 2013 155 278** **JP-A- 2013 155 278**
**US-A1- 2005 171 321** **US-A1- 2019 016 883**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**B29C 66/71, B29K 2067/006;**
**C08L 67/02, C08K 3/346, C08K 5/521, C08K 7/14, C08L 63/00, C08L 69/00;**
**C08L 67/02, C08K 5/20, C08K 5/521, C08K 7/14, C08L 63/00, C08L 69/00;**
**C08L 67/02, C08L 67/02, C08L 63/00, C08K 7/14, C08K 5/521;**
**C08L 67/02, C08L 69/00, C08L 63/00, C08K 7/14, C08K 3/34, C08K 5/20, C08K 5/521**

## Description

TECHNICAL FIELD

The present invention relates to the field of polymer materials and, in particular, relates to a polyester resin composition and a molded product thereof.

BACKGROUND ART

Polybutylene terephthalate (PBT) resin has been widely applied to mechanical components, electrical communication components, automotive components and other fields due to its various excellent properties such as heat resistance, chemical resistance, electrical properties, mechanical properties and molding processability. Especially in recent years, its application to various automotive electrical mounting components has attracted extensive attention. However, the airtightness of these components must occasionally be ensured. Traditional coupling methods such as screw fastening, adhesive bonding, heating-plate deposition and ultrasonic deposition pose issues such as long process time and insufficient design freedom.

Laser welding, as an external heating welding technology, is an engineering method for melting and fusing by irradiating a laser beam on a laminated resin molded body and making the laser beam pass through the irradiated surface and be absorbed by the other surface. This method has attracted extensive attention since it can meet the requirements for three-dimensional connection, non-contact processing and the absence of welding spatters. It also has the characteristics of rapid process, high design freedom and high bonding strength. Meanwhile, it can be seen from the above laser welding process that the laser transmittance of a welded material is one of the important parameters. When a PBT resin is bonded by laser welding, heat absorption deficiency would be easily caused if the laser transmittance of the resin is too low, such that the welding and bonding cannot be completed finally. However, if the laser intensity is increased to compensate for the insufficient transmittance and improve the heat absorption of the welded surface, the material may be easily ablated and carbonized due to overheating. Therefore, it has been an ongoing concern in this field that how to effectively increase the laser transmittance of the welded material.

Among the existing technologies for improving the transmittance of resin materials for laser welding, Patent Document 1 (Japanese Laid-Open Patent No. 2010-70626) discloses a polyester resin composition, which shows excellent laser transmittance as well as excellent cold and heat resistance and mechanical strength and is very effective for the laser welding of resin products. Its specific solution is as follows: a polyester resin composition, comprising (A) 29-84% by weight of polybutylene terephthalate (PBT) resin, (B) 5-60% by weight of at least one resin selected from a polyester resin in which repeating units formed by terephthalate groups and 1,4-cyclohexane dimethanol groups account for more than 25 mol%, and a polycarbonate resin, (C) 10-50% by weight of reinforcing fibers, (D) 1-20% by weight of a block copolymer of polyalkyl methacrylate and butyl acrylate, wherein the composition is a polyester resin composition applicable to laser welding. However, in the polyester resin composition according to said patent document, the compatibility between the PBT resin and an amorphous resin is insufficient, and the laser transmittance still requires improvement.

Patent Document 2 (Japanese Laid-Open Patent No. 2007-186584) discloses a polyester resin composition that provides excellent laser weldability and a molded product that is firmly bonded by laser welding. Its solution is as follows: the polyester resin composition is prepared by adding (b) 0 to 100 parts by weight of a reinforcing filler and (c) 0.1 to 100 parts by weight of an epoxy compound with respect to (a) 100 parts by weight of a polyester resin, and the polyester resin composition is applicable to laser welding. Although an epoxy resin is added into the composition, there is no mention of the addition of an epoxy resin with a special structure as used in the present invention or the improvement of the compatibility between the PBT resin and the amorphous polyester resin, and said polyester resin composition is insufficient in transmittance.

Patent Document 3 (Chinese Patent Application Publication No. CN1863870A) discloses a composition composed of a specific composition, such as a polybutylene terephthalate resin, a polystyrene elastomer, a polycarbonate resin and a plasticizer. It achieves the effects of improving the transmittance uniformity and reducing the transmittance difference among different parts of a molded part, but it cannot greatly increase the transmittance (the transmittance under the laser condition of 940 nm is 20% to 34%).

Additionally, Patent Document 4 (Japanese Laid-Open Patent No. 2005-336409) discloses that in a polymer alloy formed by at least compounding a polybutylene terephthalate resin and polycarbonate, a molded product can be effectively used as a transmission material for a laser welding part by a method of controlling a phase structure. However, it does not mention the improvement of the compatibility between the PBT resin and the amorphous polyester resin, and therefore such a technology increases the transmittance to a limited extent. Patent Documents 5 to 8 (JP 2010-024396 A; JP 2013-155278 A; CN 10778792 A; and US 2019/0016883 A1, respectively) disclose further specific resin compositions for laser welding as disclosed therein.

SUMMARY OF THE INVENTION

The present invention is intended to address the above problem of insufficient transmittance in the existing laser welding. Based on in-depth researches, it is found that a polyester resin composition prepared by at least compounding (A) a polybutylene terephthalate resin, (B) an amorphous resin and (C) an epoxy resin with a special structure and adjusting the melting point to 210°C-221°C, can acquire high laser transmittance. Meanwhile, a molded product manufactured from the polyester resin composition according to the present invention can allow laser to transmit through even when laser power is small or the molded product has significant thickness. Therefore, the polyester resin composition is applicable to a laser-transmitting material of a laser welding part so as to allow it to be tightly combined with a laser-absorbent material. That is, the technical solution of the present invention is as follows:

A polyester resin composition, wherein the polyester resin composition is prepared by compounding at least the following (A) to (C):

(A) 100 parts by mass of a polybutylene terephthalate resin;
(B) 15 to 100 parts by mass of an amorphous resin; and
(C) 0.01 to 5 parts by mass of at least one epoxy resin defined in claim 1; and

by using a differential scanning calorimeter in a nitrogen environment, the polyester resin composition is cooled from a molten state to 20°C at a cooling rate of 20°C/min and then heated at a heating-up rate of 20°C/min, wherein an endothermic peak during the heat-up occurs at the temperature of higher than 210°C but lower than 221°C.

In some embodiments of the polyester resin composition, the amorphous resin (B) is at least one selected from polycarbonate, amorphous polyester containing a cyclohexane dimethylene terephthalate unit or a styrene/acrylonitrile copolymer.

In the polyester resin composition of claim 1, the epoxy resin (C) is a novolac epoxy resin containing the glycidyl ether structure represented by the following general formula 1:

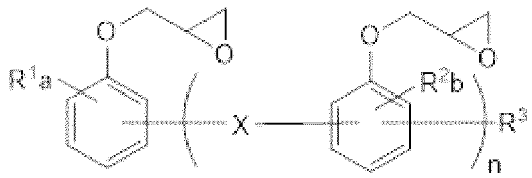 (1)

X= (2) (3)
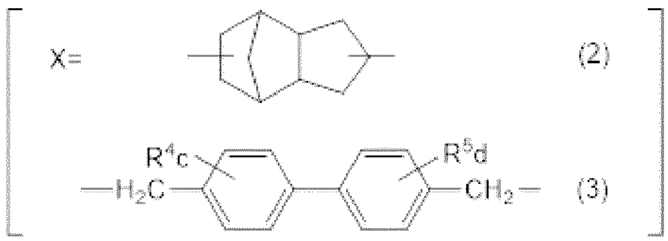
,

in the general formula 1, X indicates a divalent group represented by a general formula 2 or a general formula 3; in the general formulas 1 and 3, $R^1$, $R^2$, $R^4$ and $R^5$ are the same or different and each independently represent any one of an alkyl group having 1 to 8 carbon atoms, an aryl group having 6 to 10 carbon atoms or an alkyl ether group having 1 to 8 carbon atoms, and $R^3$ indicates any one of a hydrogen atom, an alkyl group having 1 to 8 carbon atoms or an aryl group having 6 to 10 carbon atoms; in the general formula 1, n indicates a value greater than 0 but less than or equal to 10; and in the general formulas 1 and 3, a, c and d each independently represent integers of 0 to 4 while b is an integer of 0 to 3.

In some embodiments of the polyester resin composition, the content of the epoxy resin (C) is 0.05 to 3 parts by mass with respect to 100 parts by mass of the polybutylene terephthalate resin (A).

In some embodiments of the polyester resin composition, the polyester resin composition further comprises a filler material (D).

In some embodiments of the polyester resin composition further comprising a filler material (D), the filler material (D) is at least one of glass fibers or carbon fibers.

In some embodiments of the polyester resin composition further comprising a filler material (D), the content of the filler material (D) is 1 to 150 parts by mass with respect to 100 parts by mass of the polybutylene terephthalate resin (A).

In some embodiments of the polyester resin composition, the polyester resin composition further comprises a

transesterification inhibitor (E).

In some embodiments of the polyester resin composition further comprising a transesterification inhibitor (E), the transesterification inhibitor (E) is a compound represented by the following general formula 4:

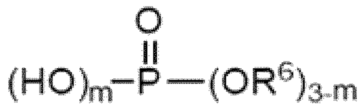

(4)

,

in the general formula 4, $R^6$ indicates an alkyl group having 1 to 30 carbon atoms, and m is 1 or 2.

In some embodiments of the polyester resin composition further comprising a transesterification inhibitor (E), the content of the transesterification inhibitor (E) is 0.025 to 0.5 parts by mass with respect to 100 parts by mass of the polybutylene terephthalate resin (A) .

In some embodiments of the polyester resin composition, the polyester resin composition further comprises a nucleating agent (F).

In some embodiments of the polyester resin composition further comprising a nucleating agent (F), the nucleating agent (F) is at least one selected from the group consisting of silica, alumina, zirconia, titania, wollastonite, kaolin, talcum powder, mica, silicon carbide, ethylene bislauramide or a sorbitol derivative.

In some embodiments of the polyester resin composition further comprising a nucleating agent (F), the content of the nucleating agent (F) is 0.05 to 5 parts by mass with respect to 100 parts by mass of the polybutylene terephthalate resin (A).

In some embodiments of the polyester resin composition, the polyester resin composition is molded under the conditions of a molding temperature of 260°C and a mold temperature of 80°C to prepare a molded piece with a thickness of 1 mm, which has the transmittance of more than 48% as measured with a spectrophotometer under the condition of a wavelength of 940 nm.

The present invention also provides a molded product, which is made of the polyester resin composition herein.

In some embodiments, the molded product is a transmittable material for laser welding.

In some embodiments of the molded product, a laser-transmitting portion of the molded product has a thickness of 3 mm or less.

The polyester resin composition due to its excellent laser transmittance can be used in various automotive electrical mounting components (various control units, various sensors, etc.), connectors, switch components, relay components, etc.

## BRIEF DESCRIPTION OF THE DRAWINGS

FIG. 1 shows a top view (A) and a side view (B), which represent test samples for transmittance evaluation.

## EMBODIMENTS OF THE INVENTION

The detailed description of the present invention will be illustrated below.

### (A) Polybutylene terephthalate resin

The (A) polybutylene terephthalate (PBT) resin as a matrix resin in the polyester resin composition according to the present invention may be exemplified as a homopolyester or copolyester taking butylene terephthalate as a main component.

Monomers that are copolymerizable in the copolyester may be exemplified as dicarboxylic acids other than a terephthalic acid, diols other than 1,4-butanediol, oxyacids or lactones, etc. Copolymeric monomers may be used singly or in a combination of two or more thereof. Herein, the amount of the copolymeric monomers is preferably 30 mol% or less of the total amount of monomers.

The dicarboxylic acids other than the terephthalic acid may be exemplified as aliphatic dicarboxylic acids (e.g., glutaric acid, hexanedioic acid, pimelic acid, suberic acid, azelaic acid, sebacic acid, undecyl dicarboxylic acid, dodecyl dicarboxylic acid and hexadecyl dicarboxylic acid), alicyclic dicarboxylic acids (e.g., hexahydrophthalic acid, hexahydroisophthalic acid and hexahydroterephthalic acid), aromatic dicarboxylic acids (e.g., phthalic acid, isophthalic acid, 2,6-naphthalenedicarboxylic acid, 4,4'-diphenyldicarboxylic acid, 4,4'-diphenylether dicarboxylic acid, 4,4'-diphenylmethane dicarboxylic acid, 4,4'-diphenylketone dicarboxylic acid or other C8-16 dicarboxylic acids). Additionally, polycarboxylic acids such as trimellitic acid and pyromellitic acid may be mixed and used as needed.

The diols other than 1,4-butanediol may be exemplified as aliphatic alkylene glycols (e.g., ethylene glycol,

propylene glycol, pentanediol, neopentyl glycol, hexanediol, heptanediol, octanediol, nonanediol, decanediol or other C2-12 alkanediols but preferably C2-10 alkanediols), polyalkoxy glycols (e.g., diethylene glycol, dipropylene glycol, dibutylene glycol, triethylene glycol, tripropylene glycol, polyethylene glycol, polypropylene glycol, polybutylene glycol or other oxyalkyl-containing glycols), aromatic diols (e.g., hydroquinone, resorcinol, naphthalenediol or other C6-C14 aromatic diols, biphenols, bisphenols, xylylene glycols), etc. Additionally, polyhydric alcohols such as glycerol, trimethylolpropane, trimethylolethane or pentaerythritol may be mixed and used as needed.

The oxyacids may be exemplified as hydroxy acids such as oxybenzoic acid, oxynaphthoic acid, hydroxyphenylacetic acid, glycolic acid or oxycaproic acid and derivatives thereof.

The lactones may be exemplified as C3-12 lactones such as propiolactone, butyrolactone, valerolactone or caprolactone.

To take the properties with respect to moldability and laser transmittance into account, it is preferred that the inherent viscosity of the polybutylene terephthalate resin (A) measured in a solution of o-chlorophenol at 25°C is in the range of 0.36-3.0 dl/g but more preferably in the range of 0.42-2.0 dl/g. In the present invention, one type of polybutylene terephthalate resin may be used but two or more polybutylene terephthalate resins with different inherent viscosities may also be used. However, it is preferable that their inherent viscosities be within the above ranges.

Meanwhile, to improve the compatibility between the polybutylene terephthalate resin (A) and the amorphous resin (B) as well as the laser transmittance, the carboxyl content of the polybutylene terephthalate resin (A) is preferably below 50 mol/ton. Here, the carboxyl content of the polybutylene terephthalate resin (A) is obtained under the condition of titration with potassium hydroxide ethanolate after being dissolved in an o-cresol/chloroform solvent.

The polybutylene terephthalate resin (A) may be prepared by polymerizing a terephthalic acid or an ester-forming derivative thereof, 1,4-butanediol and a copolymeric monomer added as needed with a conventional method (e.g., transesterification, direct esterification, etc.).

(B) Amorphous resin

The amorphous resin (B) in the polyester resin composition according to the present invention may be exemplified as a styrene homopolymer/copolymer, aromatic polyethers (such as polyphenylene ether and polyetherimide), polycarbonate, polyarylester, polysulfone, polyethersulfone, polyimide or an amorphous polyester containing a cyclohexane dimethylene terephthalate unit, etc.

The styrene homopolymer/copolymer may be exemplified as polystyrene, polychlorostyrene, poly $\alpha$-methylstyrene, a styrene/chlorostyrene copolymer, a styrene/propylene copolymer, a styrene/acrylonitrile copolymer, a styrene/butadiene copolymer, a styrene/vinyl chloride copolymer, a styrene/vinyl acetate copolymer, a styrene/maleate copolymer, a styrene/acrylate copolymer (e.g., a styrene/methyl acrylate copolymer, a styrene/ethyl acrylate copolymer, a styrene/butyl acrylate copolymer, a styrene/octyl acrylate copolymer or a styrene/phenyl acrylate copolymer), a styrene/methacrylate copolymer (e.g., a styrene/methyl methacrylate copolymer, a styrene/ethyl methacrylate copolymer, a styrene/butyl methacrylate copolymer or a styrene/phenyl methacrylate copolymer), a styrene/$\alpha$-methyl chloroacrylate copolymer or a styrene/acrylonitrile/acrylate copolymer.

The polycarbonate is prepared from one or more dihydroxy compounds, as a main raw material(s), selected from 2,2'-bis (4-hydroxyphenyl) propane (bisphenol A), 4,4'-dihydroxydiphenylalkane, 4,4'-dihydroxydiphenyl sulfone, 4,4'-dihydroxydiphenyl ether, 2,2'-bis (3,5-dimethyl-4-hydroxyphenyl) propane or 1,1'-bis (4-hydroxyphenyl) cyclohexane. Herein, the polycarbonate is preferably prepared by taking 2,2'-bis (4-hydroxyphenyl) propane (bisphenol A) as a main raw material.

As the polycarbonate prepared by taking the bisphenol A as the main raw material, other dihydroxy compounds for example 4,4'-dihydroxydiphenylalkane or 4,4'-dihydroxydiphenyl sulfone or 4,4'-dihydroxyphenyl ether (other than the bisphenol A) may also be copolymerized. The amount of other dihydroxy compounds used here is preferably 10 mol% or less with respect to the total amount of the dihydroxy compounds.

The degree of polymerization of the polycarbonate is not specifically defined, but is intended to increase the compatibility between the polycarbonate (B) and the polybutylene terephthalate (A) and improve the moldability of the polycarbonate, the viscosity average molecular weight (Mv) of the polycarbonate (B) is preferably 10,000 to 50,000. The lower limit of the viscosity average molecular weight is more preferably 15,000 or more but even more preferably 18,000 or more. Additionally, the upper limit of the viscosity average molecular weight is more preferably 40,000 or less but even more preferably 35,000 or less.

The viscosity average molecular weight (Mv) here is obtained by acquiring a limiting viscosity[$\eta$] (in dl/g) in a dichloromethane solvent at the temperature of 20°C by using an Ubbelohde viscometer and further performing calculation according to the Schnell's viscosity formula$[\eta]=1.23 \times 10^{-4} \times (Mv)^{0.83}$. The limiting viscosity[$\eta$] here is calculated with the following formula by using the specific viscosity[$\eta$sp] of the concentration[c] (g/dl) of each solution:

$$[\eta]=\lim \eta sp/c \ (c \to 0).$$

.

The amorphous polyester containing the cyclohexane dimethylene terephthalate unit refers to polyester obtained by polymerizing terephthalic acid-based dicarboxylic acid and 1,4-cyclohexanedimethanol and other diols.

Said other diols include aliphatic alkylene glycols (e.g., ethylene glycol, propylene glycol, butylene glycol, pentanediol, neopentyl glycol, hexanediol, heptanediol, octanediol, nonanediol, decanediol or other C2-12 alkyl diols but preferably C2-10 alkyl diols), polyoxyalkylene diols (e.g., diols having an oxyalkylene unit, such as diethylene glycol, dipropylene glycol, dibutylene glycol, triethylene glycol, tripropylene glycol, polyethylene glycol, polypropylene glycol and polybutylene glycol), alicyclic group diols (e.g., 1,2-cyclohexanediol, 1,3-cyclohexanediol, 1,4-cyclohexanediol, spirodiol, 1,3-cyclobutanediol, 2,2,4,4-tetramethyl-1,3-cyclobutanediol and pentacyclopentadecane dimethanol), aromatic diols (e.g., C6-C14 aromatic diols such as hydroquinone, resorcinol, naphthalene glycol, biphenols, bisphenols and xylene glycol), etc.

Here, a molar ratio [(I)/(II)] of said other diol units (I) to the 1,4-cyclohexanedimethanol unit (II) is between 1/99 and 99/1. From the standpoint of improving the compatibility with the polybutylene terephthalate (A), [(I)/(II)] is preferably less than 80/20, more preferably less than 75/25 but even more preferably less than 50/50. Meanwhile, [(I)/(II)] is preferably greater than 25/75, more preferably greater than 30/70.

Given the compatibility with the polybutylene terephthalate resin (A), the amorphous resin (B) is preferably at least one of polycarbonate, amorphous polyester containing a cyclohexane dimethylene terephthalate unit or a styrene/acrylonitrile copolymer.

In the present invention, the content of the amorphous resin (B) is 15 to 100 parts by mass with respect to 100 parts by mass of the polybutylene terephthalate (A). Within that range, the laser transmittance and the molding processability of the polyester resin composition may be improved. Furthermore, the lower limit of the content of the amorphous resin (B) is preferably 20 parts by mass or more but even more preferably 30 or more parts by mass. Meanwhile, the upper limit of said content is preferably 90 or fewer parts by mass but more preferably 80 or fewer parts by mass.

(C) Epoxy resin

The polyester resin composition according to the present invention comprises at least one epoxy resin (C) which is a novolac epoxy resin. Here, from the standpoint of improving the compatibility effect among the components, the epoxy resin (C) has a glycidyl ether structure.

In the present invention, the novolac epoxy resin is a novolac epoxy resin having a glycidyl ether structure of the following structural formula 1:

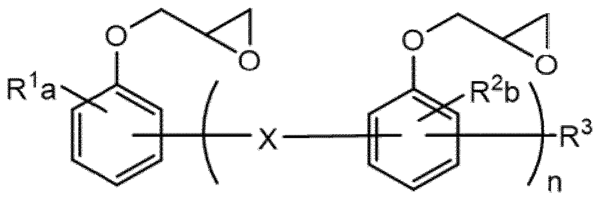

(1)

(In the above general formula 1, X represents a divalent group, which is represented by an alkyl, aryl, aralkyl or alicyclic hydrocarbon group having one to eight carbon atoms as defined in claim 1, and may contain a plurality of groups. $R^1$ and $R^2$ may be the same or different. Each independently represents a hydrogen atom, an alkyl group having 1 to 8 carbon atoms, an aryl group having 6 to 10 carbon atoms or an alkyl ether group having 1 to 8 carbon atoms as defined in claim 1. $R^3$ indicates a hydrogen atom, an alkyl group having one to eight carbon atoms or an aryl group having 6 to 10 carbon atoms as defined in claim 1. In the above general formula 1, n represents a value greater than 0 but less than or equal to 20; a represents an integer of 0 to 4, and b is an integer of 0 to 3.)

Here, from the standpoint of high reactivity with a terminal carboxyl group of the polybutylene terephthalate resin (A) and low volatility, the epoxy resin (C) is preferably solid at room temperature (25°C). From this, the novolac epoxy resin having the glycidyl ether structure represented by the above structural formula 1 has the following structure:

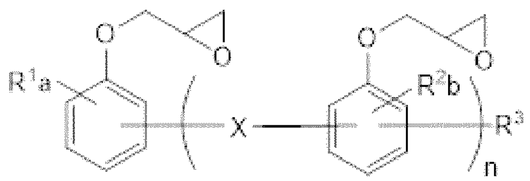

(1)

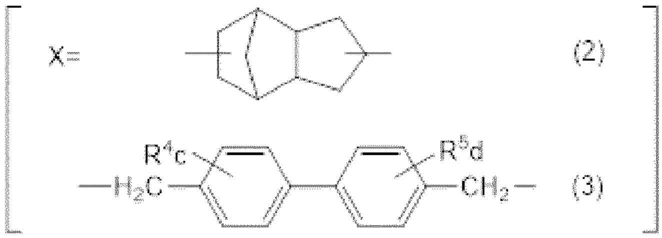

(2)

(3)

(Here, X indicates a divalent group represented by a general formula 2 or a general formula 3; in the general formulas 1 and 3, $R^1$, $R^2$, $R^4$ and $R^5$ are the same or different and each independently represent any one of an alkyl group having 1 to 8 carbon atoms, an aryl group having 6 to 10 carbon atoms or an alkyl ether group having 1 to 8 carbon atoms, and $R^3$ indicates any one of a hydrogen atom, an alkyl group having 1 to 8 carbon atoms or an aryl group having 6 to 10 carbon atoms; in the general formula 1, n indicates a value greater than 0 but less than or equal to 10; and in the general formulas 1 and 3, a, c and d each independently represent integers of 0 to 4 while b is an integer of 0 to 3.)

Additionally, a trisphenol methane epoxy resin has a structure shown in the following structural formula 5; a tetrakisphenol ethane epoxy resin has a structure shown in the following structural formula 6; and a naphthalene epoxy resin has structures shown in the following structural formulas 7 and 8:

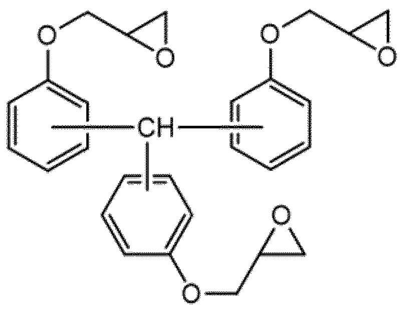

(5)

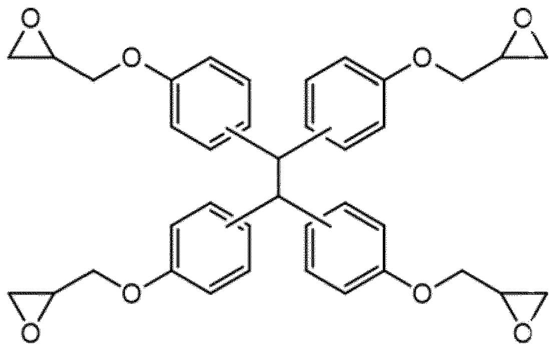

(6)

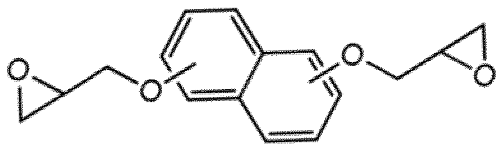

(7)

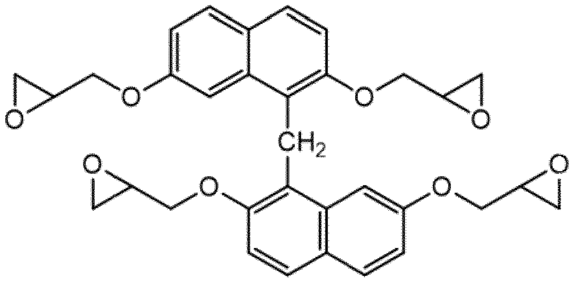

(8)

An epoxy value of the above epoxy compounds is preferably 100-1,000 g/eq. Within this range, the polyester resin composition may be suppressed from generating a gas during melt processing and, at the same time, may effectively react with a carboxyl group of the polybutylene terephthalate (A). Furthermore, the lower limit of the epoxy value is more preferably 200 g/eq or more. Additionally, the upper limit of the epoxy value is more preferably 500 g/eq or less but even more preferably 400 g/eq or less.

In the present invention, the content of the epoxy resin (C) is 0.010 to 5.0 parts by mass with respect to 100 parts by mass of the polybutylene terephthalate resin (A). When the epoxy resin is 0.010 parts by mass or more, the compatibility between the polybutylene terephthalate (A) and the amorphous resin (B) is improved, thereby increasing the transmittance. Meanwhile, when the content of the epoxy resin (C) is 5.0 or fewer parts by mass, the epoxy resin (C) in the polyester composition has good dispersibility, thereby increasing the transmittance. Furthermore, the lower limit of the content of the epoxy resin (C) is preferably 0.050 parts by mass or more but even more preferably 0.10 parts by mass or more but even more preferably 0.40 or more parts by mass. Additionally, the upper limit of the content of the epoxy resin (C) is preferably 3.0 or fewer parts by mass but more preferably 1.5 or fewer parts by mass.

(D) Filler material

A filler material (D) may be further added into the polyester resin composition according to the present invention. The filler material (D) is not specifically defined as long as it is a filler material commonly used in resins of the prior art. For example, glass fibers, carbon fibers, potassium titanate whiskers, zinc oxide whiskers, aluminum borate whiskers, aromatic polyamide fibers, alumina fibers, silicon carbide fibers, ceramic fibers, asbestos fibers, gypsum fibers, metal fibers, glass flakes, wollastonite, zeolite, sericite, kaolin, mica, talcum powder, clay, pyrophyllite, bentonite, montmorillonite, hectorite, synthetic mica, asbestos, graphite, aluminosilicate, alumina, silicon dioxide, magnesium oxide, zirconium oxide, titanium oxide, iron oxide, calcium carbonate, magnesium carbonate, dolomite, calcium sulfate, barium sulfate, magnesium hydroxide, calcium hydroxide, aluminum hydroxide, glass beads, hollow glass beads, ceramic beads, boron nitride, silicon carbide or wollastonite and the like may be used. The filler material may also be a structurally hollow filler material, but two or more of these filler materials may be selected and used in combination. The average diameter of the filler material is not specifically defined but is preferably 0.001-20 μm in order to obtain a better appearance for the polyester resin composition.

Particularly, in comprehensive consideration of low molding shrinkage and high fluidity, the filler material is preferably at least one of the glass fibers or the carbon fibers in order to acquire a polyester resin composition with excellent performances. The glass fibers are not specifically defined but may be those used in the prior art. The glass fibers may be fibers in the shape of chopped strands cut to length, coarse sand or ground fibers. Generally, the average diameter of the glass fibers preferably used is 5 to 15 μm. In the case of using the chopped strands, the length is not specifically defined, but it is preferable to use the fibers having a standard length of 3 mm, which are suitable for extrusion and mixing operations. Additionally, the cross-sectional shape of the above-mentioned fibrous filler material is not specifically defined in the present invention. Therefore, any one or more of round or flat fibers may be selected and used in combination.

Considering the balance between rigidity and toughness of the polyester resin composition according to the present invention, the content of the filler material (D) is preferably 1 to 150 parts by mass with respect to 100 parts by mass of the polybutylene terephthalate (A). Additionally, the lower limit of the filler material (D) is more preferably 10 parts by

mass or more but even more preferably 30 or more parts by mass. An upper limit of the filler material (D) is more preferably 100 or fewer parts by mass but even more preferably 80 or fewer parts by mass.

(E) Transesterification inhibitor

In the polyester resin composition according to the present invention, a transesterification inhibitor (E) may be further added. The transesterification inhibitor is a compound that may be used to deactivate a transesterification catalyst contained in the polybutylene terephthalate resin (A). It is not specifically defined, but phosphite and phosphate compounds are preferred.

As the phosphite compound, one or more of triphenyl phosphite, trinonyl phenyl phosphite, tricresyl phosphite, trimethyl phosphite, triethyl phosphite, tris (2-ethylhexyl) phosphite, tridecyl phosphite, tris (dodecyl) phosphite, tris (tridecyl) phosphite, trioleyl phosphite, 2-ethylhexyl diphenyl phosphite, diphenyl monodecyl phosphite, diphenyl mono (tridecyl) phosphite, phenyl didecyl phosphite, tris (dodecyl) trithiophosphite, diethyl phosphite, bis (2-ethylhexyl) phosphite, bis (dodecyl) phosphite, dioleoyl hydrogen phosphite, diphenyl phosphite, tetraphenyldipropylene glycol diphosphite, tetrakis (C12-C15 alkyl)-4,4'-isopropylidene diphenyl diphosphite, 4,4'-butylene bis-(3-methyl-6-tert-butylphenyl)-tetrakis(tridecyl) diphosphite, bis (decyl) pentaerythritol diphosphite, bis (tridecyl) pentaerythritol diphosphite, tris (octadecyl) phosphite, bis (octadecyl) pentaerythritol diphosphite, tris (2,4-di-tert-butylphenyl) phosphite, hydrogenated bisphenol A phenol phosphite polymer, tetraphenyltetrakis (tridecyl) pentaerythritol tetraphosphite, tetrakis (tridecyl) 4,4'-isopropylene diphenyl diphosphite, bis (nonylphenyl) pentaerythritol diphosphite, dilauryl pentaerythritol diphosphate, tris (4-tert-butylphenyl) phosphite, tris (2,4-di-tert-butylphenyl) phosphite, hydrogenated bisphenol A pentaerythritol phosphite polymer, bis (2,4-Di-tert-butylphenyl) pentaerythritol diphosphite, bis (2,6-di-tert-butyl-4-methylphenyl) pentaerythritol diphosphite, bis (2-tert-butylphenyl)phenyl phosphite, bis (2,4,6-tri-tert-butylphenyl) pentaerythritol diphosphite, 2,2'-methylene bis (4,6-di-tert-butylphenyl)-2-ethylhexyl phosphite, 2,2'-methylene bis (4,6-di-tert-butylphenyl) octyl phosphite, bis (2,4-dicumylphenyl) pentaerythritol diphosphite or tetrakis (2,4-di-tert-butylphenyl)-4,4'-biphenylene diphosphite and other compounds is/are preferred.

Besides, the phosphate compound is preferably a compound exemplified and represented by the following general formula 4:

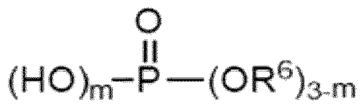

(4)

(In the general formula 4, $R^6$ indicates an alkyl group having one to 30 carbon atoms, and m is 1 or 2.)

The compound represented by the general formula 4 may be specifically exemplified as methyl phosphate, dimethyl phosphate, ethyl phosphate, diethyl phosphate, isopropyl phosphate, diisopropyl phosphate, butyl phosphate, dibutyl phosphate, butoxyethyl phosphate, dibutoxyethyl phosphate, 2-ethyl hexanoate phosphate, di-2-ethyl hexanoate phosphate, octyl phosphate, dioctyl phosphate, isodecyl phosphate, diisodecyl phosphate, isotridecyl phosphate, diisotridecyl phosphate, n-dodecyl phosphate, di (dodecyl) phosphate), octadecyl phosphate, di(octadecyl) phosphate, tetracosyl phosphate, bis (tetracosyl) phosphate, oleate phosphate, dioleate phosphate, etc. Among them, the phosphate compound is more preferably octadecyl phosphate or di (octadecyl) phosphate. These phosphate compounds may be used singly or in a combination of two or more thereof. Additionally, the phosphate compounds listed above may also be used as a metal salt that is formed together with zinc, aluminum or the like.

For the catalyst deactivation of the transesterification reaction, the use of the phosphate compound shows a higher deactivation rate than that of the phosphite compound. Therefore, the phosphate compound is preferred. Because the transesterification inhibitor (E) may cause the polybutylene terephthalate resin (A) to decompose if added in excess, the content of the transesterification inhibitor (E) is preferably 0.025 to 0.5 parts by mass with respect to 100 parts by mass of the polybutylene terephthalate resin (A). Moreover, the lower limit of the content of (E) is more preferably 0.03 or more parts by mass but even more preferably 0.1 or more parts by mass. Meanwhile, the upper limit of the content of (E) is more preferably 0.3 or fewer parts by mass but even more preferably 0.25 or fewer parts by mass.

(F) Nucleating agent

The nucleating agent (F) used as a crystallization accelerator in the polyester resin composition according to the present invention is not specifically defined, and therefore a substance generally used as a crystallization nucleating agent for a polymer is satisfactory. The nucleating agent (F) may be any one or more selected from inorganic crystallization nucleating agents or organic crystallization nucleating agents.

The inorganic crystallization nucleating agent may be exemplified as silica, alumina, zirconia, titania, wollastonite, kaolin, talcum powder, mica, silicon carbide, etc.

Additionally, aliphatic carboxylamide, sorbitol derivatives and the like may be used as the organic crystallization nucleating agents. The aliphatic carboxylamide may be exemplified as an aliphatic monocarboxylic acid amide such as lauroylamide, palmitamide, oleamide, stearamide, erucylamide, behenamide, ricinolamide or hydroxy stearamide; N-substituted aliphatic monocarboxyl amides such as N-oleyl palmitamide, N-oleyl oleamide, N-oleyl stearamide, N-stearyl oleamide, N-stearyl stearamide, N-stearyl erucylamide, N-hydroxymethyl steariamide or N-hydroxymethyl behenamide; an aliphatic bis-carboxylamide such as methylene bis stearamide, ethylene bis-lauroamide, ethylidene bis-decanoylamide, ethylidene bis-ole amide, ethylidene bis steariamide, ethylidene bis-erucylamide, ethylidene bis-behenamide, ethylidene bis-isostearamide, ethylidene bishydroxy stearamide, butylidene bis steariamide, hexamethylene bis-oleamide, hexamethylene bis stearamide, hexamethylene bisbehenamide, hexamethylene bis-hydroxy stearamide, m-xylylene bis stearic amide or m-xylylene bis-12-hydroxy steariamide; an N-substituted aliphatic carboxyldiamide such as N,N'-dioleyl decanodiamide, N,N'-dioleyl adipamide, N,N-distearyl adipamide, N,N'-distearyl decanodiamide, N,N'-distearyl m-phthalamide or N,N'-distearyl terephthalic amide; and an N-substituted urea such as N-butyl-N'-stearyl urea, N-propyl-N'-stearyl urea, N-stearyl-N'-stearyl urea, N-phenyl-N'-stearyl urea, xylylene bis stearyl urea, tolyl bis stearyl urea, hexamethylene bis stearyl urea, diphenylmethane bis stearyl urea or diphenylmethane dilauryl urea.

The sorbitol derivatives may be exemplified as, for example, bis (benzylidene) sorbitol, bis (p-methylbenzylidene) sorbitol, bis (p-ethylbenzylidene) sorbitol, bis (p-chlorobenzylidene) sorbitol, bis (p-bromobenzylidene) sorbitol or sorbitol derivatives obtained by chemical modification of the above-mentioned sorbitol derivatives, etc.

Considering the effect of promoting the crystallization of the polybutylene terephthalate resin (A), the nucleating agent (F) is preferably at least one selected from the group consisting of silica, alumina, zirconia, titania, wollastonite, kaolin, talcum powder, mica, silicon carbide, ethylene bislauramide or a sorbitol derivative. Moreover, the content of the nucleating agent (F) is preferably 0.05 to 5 parts by mass with respect to 100 parts by mass of the polybutylene terephthalate resin (A). Within this range of mass, the effect of promoting crystallization may be maintained and laser transmittance may be improved. The content of the nucleating agent (F) is more preferably 0.1 or more parts by mass but is even more preferably three or fewer parts by mass but even more preferably two or fewer parts by mass.

(G) Other additives

In addition to the components (A) to (F), the polyester resin composition according to the present invention may further include additives such as an antioxidant, a mold-releasing agent, a flame retardant or color master batches.

The antioxidant is preferably at least one of a phenolic antioxidant or a sulfur antioxidant. To achieve better heat resistance and higher thermal stability, the combined use of the phenol-based antioxidant and the sulfur antioxidant is preferred.

The phenolic antioxidant may be exemplified as, for example, 2,4-dimethyl-6-tert-butylphenol, 2,6-di-tertbutylphenol, 2,6-di-tert-butyl-p-cresol, 2,6-di-tert-butyl-4-ethylphenol, 4,4'-butylene bis (6-tert-butyl-3-methylphenol), 2,2'-methylene bis (4-methyl 6-tertbutylphenol), 2,2'-methylene-bis (4-ethyl-6-tertbutylphenol), octadecyl-3-(3',5'-di-tert-butyl-4'-hydroxybenzene) propionate, pentaerythritol tetrakis[3-(3,5-di-tert-butyl-4-hydroxybenzene)] propionate], 1,1,3-tris (2-methyl-4-hydroxy-5-di-tert-butylphenyl) butane, tris (3,5-di-tert-butyl-4-hydroxybenzyl) isocyanurate, triethylene glycol-bis[3-(3-tert-butyl-4-hydroxy-5-methylbenzene) propionate], 1,6-hexanediol bis[3-(3,5-di-tert-butyl-4-hydroxyphenyl) propionate], 2,4-bis (n-octylthio)-6-(4-hydroxy-3,5-di-tert-butylanilino)-1,3,5-triazine, 2,2-thiodiethylene bis[3-(3,5-di-tert-butyl-4-hydroxybenzene) propionate], N,N'-hexamethylene bis (3,5-di-tert-butyl-4-hydroxyhydrocinnamon amide), 3,5-di-tert-butyl-4-hydroxybenzyl diethyl phosphite, 1,3,5-trimethyl-2,4,6-tris (3,5-di-tert-butyl-4-hydroxybenzyl) benzene, tris (3,5-di-tert-butyl-4-hydroxybenzyl) isocyanurate, 2,4-bis[(octylthio)methyl]o-cresol or isooctyl-3-(3,5-di-tert-butyl-4-hydroxybenzene) propionate, etc.

The sulfur antioxidant may be exemplified as, for example, dilauryl thiodipropionate, dimyristyl thiodipropionate, distearyl thiodipropionate, bis (tridecane) thiodipropionate, pentaerythryl(3-lauryl thiopropionate) or 2-mercapto benzimidazole, etc.

The above-mentioned antioxidants may be used singly but may also be used in combination of more thereof, since a synergistic effect would be produced by combining two or more antioxidants.

The content of the antioxidant is preferably 0.01 to 3 parts by mass with respect to the total of 100 parts by mass of the polybutylene terephthalate (A) and the amorphous resin (B). Within this range, an anti-oxidation effect may be maintained, and meanwhile a gas may be suppressed from being generated during melt processing. The content is more preferably 0.05 or more parts by mass but even more preferably 0.1 or more parts by mass. Additionally, the content is preferably two or fewer parts by mass but even more preferably one or fewer parts by mass.

The mold-releasing agent is not specifically defined, and any mold-releasing agent for general thermoplastic resins may be used. Specifically, the mold-releasing agent may be exemplified as fatty acid, fatty acid metal salt, hydroxy fatty acid, fatty acid ester, aliphatic partially saponified ester, paraffin, low-molecular-weight polyolefin, fatty acid amide,

alkylene fatty acid bisamide, aliphatic ketone, fatty acid lower alcohol ester, fatty acid polyol ester, fatty acid polyglycol ester or modified polysiloxane, etc.

The fatty acid is preferably a fatty acid having 6 to 40 carbon atoms and may be specifically exemplified as oleic acid, lauric acid, stearic acid, hydroxystearic acid, behenic acid, arachidonic acid, linoleic acid, linolenic acid, ricinoleic acid, palmitic acid, stearic acid, montanic acid or a mixture thereof.

The fatty acid metal salt is preferably a fatty-acid alkali metal salt or alkaline earth metal salt having 6 to 40 carbon atoms and may be specifically exemplified as calcium stearate, sodium montanate or calcium montanate, etc.

The hydroxy fatty acid may be exemplified as 1,2-hydroxy fatty acid, etc.

The fatty acid ester may be exemplified as stearate, oleate, linoleate, linolenate, adipate, behenate, arachidonate, montanate, isostearate or polymeric acid ester, etc.

The aliphatic partially saponified ester may be exemplified as partially saponified montanate.

The paraffin preferably has 18 or more carbon atoms and may be exemplified as liquid paraffin, natural paraffin, microcrystalline wax or petrolatum, etc.

The low-molecular-weight polyolefin preferably has a weight-average molecular weight of 5,000 or less and may be specifically exemplified as polyethylene wax, maleic acid-modified polyethylene wax, oxidized polyethylene wax, chlorinated polyethylene wax or polypropylene wax.

The fatty acid amide preferably has six or more carbon atoms and may be specifically exemplified as oleamide, erucylamide or behenic amide, etc.

The alkylene bis-fatty acid amide preferably has six or more carbon atoms and may be specifically exemplified as methylene bis stearamide, ethylene bis stearamide or N,N-bis (2-hydroxylethyl) stearamide, etc.

The aliphatic ketone may be exemplified as higher aliphatic ketone, etc.

The fatty acid low alcohol ester preferably has six or more carbon atoms and may be specifically exemplified as ethyl stearate, butyl stearate, ethyl behenate or rice wax, etc.

The fatty acid polyol ester may be exemplified as glycerol monostearate, pentaerythritol monostearate, pentaerythritol tetrastearate, pentaerythritol adipate stearate, dipentaerythritol adipate stearate or sorbitan monobehenate, etc.

The fatty acid polyglycol ester may be exemplified as polyethylene glycol fatty acid ester or polypropylene glycol fatty acid ester.

The modified polysiloxane may be exemplified as methyl styryl-modified polysiloxane, polyether-modified polysiloxane, high fatty acid alkoxy-modified polysiloxane, higher fatty acid-containing polysiloxane, high fatty acid ester-modified polysiloxane, methacrylic acid-modified polysiloxane or fluorine-modified polysiloxane, etc.

The flame retardant may be exemplified as a bromine-based flame retardant, including decabromodiphenyl ether, octabromodiphenyl ether, tetrabromodiphenyl ether, tetrabromophthalic anhydride, hexabromocyclododecane, bis (2,4,6-tribromophenoxy)=ethane, ethylenebistetrabromophthalimide, hexabromobenzene, 1,1-sulfonyl[3,5-dibromo-4-(2,3-dibromopropoxy)]benzene, polydibromophenylene oxide, tetrabromobisphenol-S, tris (2,3-dibromopropyl) isocyanurate, tribromophenol, tribromophenylallyl ether, tribromoneopentyl alcohol, brominated polystyrene, brominated polyethylene, tetrabromobisphenol-A, tetrabromobisphenol-A derivatives, brominated epoxy resins such as tetrabromobisphenol-A-epoxide oligomers or polymers and brominated phenol linear phenolic varnish epoxides, tetrabromobisphenol-A-carbonate oligomers or polymers, tetrabromobisphenol-A-bis (2-hydroxydiethyl ether), tetrabromobisphenol-A-bis (2,3-dibromopropyl ether), tetrabromobisphenol-A-bis (allyl ether), tetrabromocyclooctane, ethylene bis-pentabromodiphenyl, tris (tribromoneopentyl) phosphate, poly (pentabromobenzyl polyacrylate), octabromotrimethylphenyl dihydroindene, dibromoneopentyl glycol, pentabromobenzyl polyacrylate, dibromotolyl glycidyl ether or N,N'-ethylene-bis-tetrabromoterephthalimide, etc. In the present invention, the flame retardant described above may also be exemplified as a chlorine-based flame retardant, including chlorinated paraffin, chlorinated polyethylene, perchlorocyclopentadecane or tetrachlorophthalic anhydride, etc.

For the polyester resin composition in the present invention, with a differential scanning calorimeter in a nitrogen environment, the polyester resin composition is cooled from a molten state to 20°C at a cooling rate of 20°C/min and then heated at a heating-up rate of 20°C/min, wherein an endothermic peak during the heat-up occurs at the temperature of higher than 210°C but lower than 221°C. By controlling the endothermic peak temperature within this range, the compatibility between the polybutylene terephthalate resin (A) and the amorphous resin (B) is improved, the transmittance is improved and the polyester resin composition with excellent heat resistance may be obtained. Furthermore, the upper limit of the endothermic peak temperature is preferably 220°C or lower but more preferably 219°C or lower. Meanwhile, the lower limit of the endothermic peak temperature is preferably 215°C or higher but more preferably 217°C or higher.

The polyester resin composition according to the present invention may be produced by the following production method: The main components (A), (B), (C) and the components (E), (F) and the like added as needed are mixed in a commonly used melt mixer such as a single-screw or twin-screw extruder, a Banbury mixer, a kneader and a mixer in accordance with corresponding melt-mixing methods.

The polyester resin composition according to the present invention may be prepared by injection molding,

extrusion molding and other methods to obtain a molded product.

In the case of injection molding, the mold temperature is preferably in the range of more than 40°C but less than 250°C, and it is contemplated that the advantages of high molding efficiency and good appearance of the molded product may be achieved when the curing is performed in a temperature range of more than the glass transition temperature but less than the melting point of the polybutylene terephthalate resin (A). Therefore, the mold temperature is preferably in the range of more than 60°C but less than 140°C.

The polyester resin composition according to the present invention is molded under the conditions of a molding temperature of 260°C and a mold temperature of 80°C to prepare a molded product with a thickness of 1 mm, which has the transmittance of preferably more than 48% as measured with a spectrophotometer under the condition of a wavelength of 940 nm. The molded product according to the present invention has high transmittance and may be used as a transmission material for laser welding. The transmittance here refers to a value measured by the spectrophotometer with an integrating sphere as a detector.

Although the thickness of the molded product is not specifically defined, the thickness of the laser transmitting portion of the molded product is preferably 3 mm or less from the standpoint of improving the transmittance.

EMBODIMENTS

The present invention will be further illustrated in the following embodiments, which are provided here merely for the purpose of illustrating the present invention. Raw materials and test devices as used in the following embodiments are shown herein:

1. Raw Materials of Polyester Resin Composition

(A) Polybutylene terephthalate resin
Polybutylene terephthalate resin (PBT): from Toray Industries Inc., with the intrinsic viscosity of 0.76 dl/g and the terminal carboxyl concentration of 15 mol/ton
(B) Amorphous resin

Polycarbonate (PC): S1000, from Mitsubishi Engineering-Plastics Corporation
Cyclohexanedimethylene terephthalate/ethylene terephthalate copolymer (PCTG): Eastar EB062, from Eastman Chemical Company, USA

(C) Epoxy resin

HP-7200H from DIC Corporation (a novolac epoxy resin with an aromatic glycidyl ether structure, with an epoxy value of 280 g/eq)
HP4700 from DIC Corporation (a naphthalene epoxy resin with an aromatic glycidyl ether structure, with an epoxy value of 160 g/eq)
Hexion Cardura E10P (branched alkane glycidyl carboxylate, with an epoxy value of 244 g/eq)
JER1009 from Mitsubishi Chemical Corporation (bisphenol A epoxy resin, with an epoxy value of 2,950 g/eq)

(D) Filler material
Glass fibers: T187 from Nippon Electric Glass Corporation
(E) Transesterification inhibitor
AX71 (a mixture of distearic acid phosphate and stearic acid phosphate) from ADEKA Corporation
(F) Nucleating agent

Nucleating agent 1: Hightron (talcum powder) from Takehara Chemical Industry Corporation
Nucleating agent 2: Ethylene bislauramide (EBL) from Guangzhou Ouying Chemical Co., Ltd.

2. Performance tests of polyester resin composition obtained in the embodiments and comparative examples

(1) Transmittance test

The transmittance was evaluated by using an ultraviolet near-infrared spectrophotometer (UV-3100) manufactured by Shimadzu Corporation. Additionally, an integrating sphere was used as a detector. For transmittance, the light transmittance of a sample with a thickness of 1 mm was measured in a near-infrared region at the wavelength of 940 nm, and a ratio of the amount of transmitted light to the amount of incident light was expressed in percentage in the table. For the

measurement of transmittance in the near-infrared region at the wavelength of 940 nm, the transmittance was measured every 10 nm, and the maximum and minimum transmittances in the near-infrared region at the wavelength of 940 nm were determined. The measurement was performed five times in order to determine the average value of the upper limit and the lower limit.

(2) Melting point (Tm) test

With a differential scanning calorimeter (DSC250) from TA Company, the polyester resin composition prepared in each of the embodiments and comparative examples was accurately weighed to 5-7 mg and then heated at a heating-up rate of 20°C/min in a nitrogen atmosphere from 20°C to a temperature 30°C higher than the temperature T0 of an endothermic peak that appeared; the polyester resin composition was maintained at this temperature for two minutes and then cooled to 20°C at a cooling rate of 20°C/min; and the polyester resin composition was maintained at 20°C for two minutes and then heated again at a heating-up rate of 20°C/min to a temperature 30°C higher than T0, thereby obtaining the melting point Tm. Tm indicates the temperature corresponding to a tip of the endothermic peak during the secondary heating process.

Embodiments 1 to 5 and 7, and Reference Embodiment 6

The raw materials as shown in Table 1 were molten and mixed by using a TEX30α twin-screw extruder (L/D=45.5) manufactured by Japan Steel Works, Ltd. The extruder was provided with 13 heating zones and two sets of feeding apparatuses with measuring instruments and was also provided with a vacuum exhaust device. In addition to glass fibers, other raw materials were mixed and then added from a main feeding port of the extruder, and the glass fibers were added from a side feeding port of the extruder. The temperature of the extruder was set within the range of 100°C to 260°C. All the materials were molten and mixed, cooled and granulated to obtain a granular polyester resin composition. The granules were dried in an oven at 130°C for three hours and then subjected to injection molding by using a NEX50 injection molding machine manufactured by Nissei Plastic Industrial Co., Ltd. under the conditions of a molding temperature of 260°C and a mold temperature of 80°C, to obtain a sample piece for transmittance evaluation (with a sample mold having the dimensions of 80 mm in length × 80 mm in width × 1 mm in thickness). The test piece was tested based on the above-mentioned transmittance and melting point test methods, with the test results shown in Table 1.

Comparative Examples 1 to 10

A preparation method is the same as that in Embodiment 1, the raw materials are shown in Table 2, and the test is conducted based on the above-mentioned transmittance and melting point test methods, with the test results shown in Table 2.

Table 1

| Component | | Unit | Embodiment 1 | Embodiment 2 | Embodiment 3 | Embodiment 4 | Embodiment 5 | Embodiment 6 | Embodiment 7 |
|---|---|---|---|---|---|---|---|---|---|
| PBT | | Parts by mass | 100 | 100 | 100 | 100 | 100 | 100 | 100 |
| PC | S1000 | Parts by mass | 25 | 25 | 33.3 | 33.3 | 81.8 | 33.3 | |
| PCTG | EB062 | Parts by mass | | | | | | | 57.5 |
| Epoxy resin | HP-7200H | Parts by mass | 2.14 | 0.714 | 0.762 | 0.762 | 1.04 | | 0.92 |
| | HP4700 | | | | | | | 0.762 | |
| GF | T187 | Parts by mass | 53.6 | 53.6 | 57.1 | 57.1 | 77.9 | 57.1 | 69 |
| Transesterification inhibitor | AX71 | Parts by mass | 0.179 | 0.179 | 0.19 | 0.19 | 0.26 | 0.19 | 0.057 |
| Nucleating agent | Hightron | Parts by mass | 0.446 | | | 0.476 | 0.65 | 0.476 | |
| | EBL | Parts by mass | | 0.446 | | | | | |
| $T_{ini}$ | | °C | 220 | 219 | 218 | 218 | 217 | 218 | 220 |
| Transmittance at 1 mmt | | % | 49 | 55 | 54 | 51 | 74 | 50 | 63 |

Embodiment 6 is a Reference Embodiment

Table 2

| Component | | Unit | Comparative Example 1 | Comparative Example 2 | Camparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|---|
| PBT | | Parts by mass | 100 | 100 | 100 | 100 | 100 | 100 | 100 | 100 | 100 | 100 |
| PC | S1000 | Parts by mass | | | 11.1 | 25 | 25 | 11.1 | 25 | 25 | 33.3 | 33.3 |
| Epoxy resin | HP-7200H | Parts by mass | | 1.43 | | | 0.0089 | 0.635 | 0.714 | 5.36 | | |
| | Cardura E10P | Parts by mass | | | | | | | | | 0.762 | |
| | JER1009 | Parts by mass | | | | | | | | | | 0.762 |
| GF | T187 | Parts by mass | 42.9 | 42.9 | 47.6 | 53.6 | 53.6 | 47.6 | 53.6 | 53.6 | 57.1 | 57.1 |
| Transesterification inhibitor | AX71 | Parts by mass | | | 0.159 | 0.179 | 0.179 | 0.159 | 0.179 | 0.179 | 0.19 | 0.19 |
| Nucleating agent | Hightron | Parts by mass | | | | 0.446 | 0.446 | | 0.446 | 0.446 | 0.476 | 0.476 |
| | EBL | Parts by mass | | | | | | | | | | |
| Tm | | °C | 224 | 223 | 224 | 223 | 223 | 222 | 222 | 217 | 222 | 222 |
| Transmittance at 1 mmt | | % | 27 | 27 | 31 | 35 | 35 | 41 | 45 | 42 | 47 | 45 |

As can be seen from the comparison between the embodiments 1-7 and the comparative examples 1-4, in the case that the polybutylene terephthalate resin (A), the amorphous resin (B) and the specific epoxy resin (C) as the specific components of the present invention are satisfactory and the requirement that the melting point of the composition (under the test conditions specified by DSC) is higher than 210°C but lower than 221°C is met, the transmittance (>48%) of the resin composition is far higher than that of the resin composition that does not meet the above conditions at the same time.

As can be seen from the comparison between Embodiment 1 and Comparative Examples 5 and 8, the transmittance of the polyester resin composition is poor when the content of the specific epoxy resin (C) is too much or too little.

From the comparison among Embodiment 4, Comparative Example 9 and Comparative Example 10, the transmittance of the polyester resin composition with the addition of the epoxy resin (HP-7200H) is higher than that of polyester resin composition with the addition of the epoxy resin Cardura E10P or JER1009. It indicates that high transmittance may be achieved by adding the epoxy resin of the specific structure according to the present invention.

As can be seen from the comparison between Embodiment 1 and Comparative Example 7, in addition to the specific contents of the polybutylene terephthalate resin (A), the amorphous resin (B) and the specific epoxy resin (C), the effect of improving the transmittance according to the present invention can also be achieved by allowing the melting point of the resin composition to be within the specific range in the present invention.

Additionally, as can be seen from the comparisons between Embodiment 3 and Embodiment 4 and between Comparative Example 7 and Embodiment 2, the addition of the nucleating agent and the type of the nucleating agent will affect the compatibility between (A) and (B) in the polyester resin composition as well as the transmittance.

## Claims

1. A polyester resin composition, wherein the polyester resin composition is prepared by compounding at least the following (A) to (C):

   (A) 100 parts by mass of a polybutylene terephthalate resin,
   (B) 15 to 100 parts by mass of an amorphous resin, and
   (C) 0.01 to 5.0 parts by mass of a novolac epoxy resin containing a glycidyl ether structure represented by the following general formula 1:

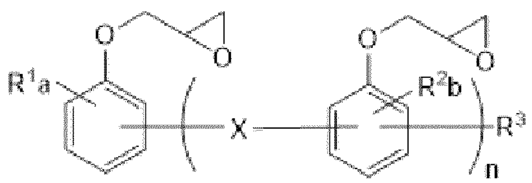 (1)

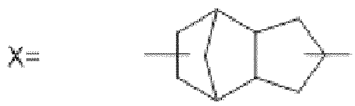 (2)

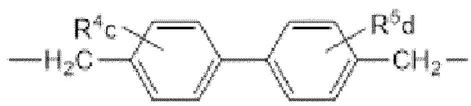 (3)

   in the general formula 1, X indicates a divalent group represented by a general formula 2 or a general formula 3; in the general formulas 1 and 3, $R^1$, $R^2$, $R^4$ and $R^5$ are the same or different and each independently represent any one of an alkyl group having 1 to 8 carbon atoms, an aryl group having 6 to 10 carbon atoms or an alkyl ether group having 1 to 8 carbon atoms, and $R^3$ indicates any one of a hydrogen atom, an alkyl group having 1 to 8 carbon atoms or an aryl group having 6 to 10 carbon atoms; in the general formula 1, n indicates a value greater than 0 but less than or equal to 10; and in the general formulas 1 and 3, a, c and d each independently represent integers of 0 to 4, and b is an integer of 0 to 3 and
   by using a differential scanning calorimeter in a nitrogen environment, the polyester resin composition is cooled from a molten state to 20°C at a cooling rate of 20°C/min and then heated at a heating-up rate of 20°C/min, wherein an endothermic peak during the heat-up occurs at the temperature of higher than 210°C

but lower than 221°C.

**2.** The polyester resin composition according to Claim 1, wherein the amorphous resin (B) is at least one selected from polycarbonate, amorphous polyester containing a cyclohexane dimethylene terephthalate unit or a styrene/acrylonitrile copolymer.

**3.** The polyester resin composition according to Claim 1, wherein the content of the epoxy resin (C) is 0.05 to 3 parts by mass with respect to 100 parts by mass of the polybutylene terephthalate resin (A).

**4.** The polyester resin composition according to Claim 1, wherein the polyester resin composition further comprises a filler material (D).

**5.** The polyester resin composition according to Claim 4, wherein the filler material (D) is at least one of glass fibers or carbon fibers, or
wherein the content of the filler material (D) is one to 150 parts by mass with respect to 100 parts by mass of the polybutylene terephthalate resin (A).

**6.** The polyester resin composition according to Claim 1, wherein the polyester resin composition further comprises a transesterification inhibitor (E).

**7.** The polyester resin composition according to Claim 6, wherein the transesterification inhibitor (E) is a compound represented by the following general formula 4:

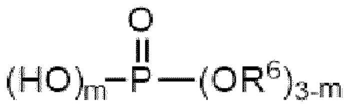

(4),

In the general formula 4, $R^6$ indicates an alkyl group having one to 30 carbon atoms, and m is 1 or 2, or
wherein the content of the transesterification inhibitor € is 0.025-0.5 parts by mass with respect to 100 parts by mass of the polybutylene terephthalate resin (A).

**8.** The polyester resin composition of Claim 1, wherein the polyester resin composition further comprises a nucleating agent (F).

**9.** The polyester resin composition according to Claim 8, wherein the nucleating agent (F) is at least one selected from the group consisting of silica, alumina, zirconia, titania, wollastonite, kaolin, talcum powder, mica, silicon carbide, ethylene bislauramide or a sorbitol derivative, or
wherein the content of the nucleating agent (F) is 0.05 to 5 parts by mass with respect to 100 parts by mass of the polybutylene terephthalate resin (A).

**10.** The polyester resin composition according to Claim 1, wherein the polyester resin composition is molded under the conditions of a molding temperature of 260°C and a mold temperature of 80°C to prepare a molded sheet with a thickness of 1 mm, which has the transmittance of more than 48% as measured with a spectrophotometer under the condition of a wavelength of 940 nm.

**11.** A molded product, which is made of the polyester resin composition according to any one of Claims 1 to 9.

**12.** The molded product according to Claim 11, wherein the molded product is a transmittable material for laser welding.

**13.** The molded product according to Claim 11, wherein a laser-transmitting portion of the molded product has a thickness of 3 mm or less.

## Patentansprüche

**1.** Polyesterharz-Zusammensetzung, wobei die Polyesterharz-Zusammensetzung durch Mischen von zumindest den folgenden (A) bis (C) hergestellt wird:

(A) 100 Massenteile eines Polybutylenterephthalat-Harzes,
(B) 15 bis 100 Massenteile eines amorphen Harzes und
(C) 0,01 bis 5,0 Massenteile eines Novolak-Epoxidharzes, das eine Glycidylether-Struktur enthält, die durch die folgende Formel 1 dargestellt ist:

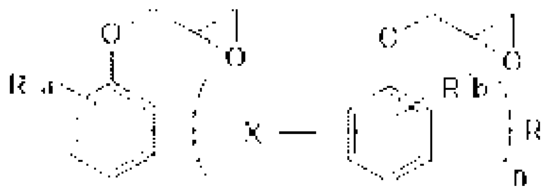
(1)

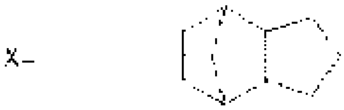
(2)

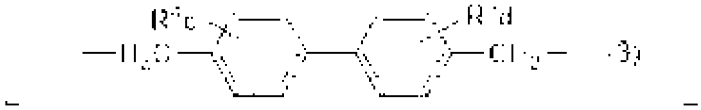
(3)

wobei in der allgemeinen Formel 1 X für eine zweiwertige Gruppe steht, die durch die allgemeine Formel 2 oder die allgemeine Formel 3 dargestellt ist; in den allgemeinen Formeln 1 und 3 $R^1$, $R^2$, $R^4$ und $R^5$ gleich oder unterschiedlich sind und jeweils unabhängig für eine beliebige aus einer Alkylgruppe mit 1 bis 8 Kohlenstoffatomen, einer Arylgruppe mit 6 bis 10 Kohlenstoffatomen und einer Alkylethergruppe mit 1 bis 8 Kohlenstoffatomen stehen und $R^3$ für ein beliebiges aus einem Wasserstoffatom, einer Alkylgruppe mit 1 bis 8 Kohlenstoffatomen und einer Arylgruppe mit 6 bis 10 Kohlenstoffatome steht; in der allgemeinen Formel 1 n für einen Wert größer 0, aber kleiner oder gleich 10 steht; und in den allgemeinen Formeln 1 und 3, a, c und d jeweils unabhängig für ganze Zahlen von 0 bis 4 stehen und b eine ganze Zahl von 0 bis 3 ist; und
wobei die Polyesterharz-Zusammensetzung unter Verwendung eines dynamischen Differenzkalorimeters in einer Stickstoffumgebung vom geschmolzenen Zustand mit einer Kühlrate von 20 °C/min auf 20 °C abgekühlt wird und dann mit einer Heizrate von 20 °C/min erhitzt wird, wobei während des Erhitzens ein endothermer Peak bei einer Temperatur von mehr als 210 °C, aber weniger als 221 °C auftritt.

**2.** Polyesterharz-Zusammensetzung nach Anspruch 1, wobei das amorphe Harz (B) zumindest eines, ausgewählt aus Polycarbonat, amorphem Polyester, der eine Cyclohexandimethylenterephthalat-Einheit enthält, und einem Styrol/Acrylnitril-Copolymer ist.

**3.** Polyesterharz-Zusammensetzung nach Anspruch 1, wobei der Gehalt des Epoxidharzes (C) 0,05 bis 3 Massenteile, bezogen auf 100 Massenteile des Polybutylenterephthalat-Harzes (A) beträgt.

**4.** Polyesterharz-Zusammensetzung nach Anspruch 1, wobei die Polyesterharz-Zusammensetzung weiters einen Füllstoff (D) umfasst.

**5.** Polyesterharz-Zusammensetzung nach Anspruch 4, wobei der Füllstoff (D) zumindest einer aus Glasfasern und Kohlenstofffasern ist oder
wobei der Gehalt des Füllstoffs (D) 1 bis 150 Massenteile, bezogen auf 100 Massenteile des Polybutylenterephthalat-Harzes (A) beträgt.

**6.** Polyesterharz-Zusammensetzung nach Anspruch 1, wobei die Polyesterharz-Zusammensetzung weiters einen Umesterungs-Inhibitor (E) umfasst.

**7.** Polyesterharz-Zusammensetzung nach Anspruch 6, wobei der Umesterungs-Inhibitor (E) eine Verbindung ist, die durch die folgende allgemeine Formel 4 dargestellt ist:

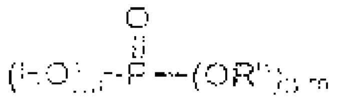

(4),

wobei in der allgemeinen Formel 4 $R^6$ für eine Alkylgruppe mit 1 bis 30 Kohlenstoffatomen steht und m = 1 oder 2 ist oder

wobei der Gehalt des Umesterungs-Inhibitors (E) 0,025 bis 0,5 Massenteile, bezogen auf 100 Massenteile des Polybutylenterephthalat-Harzes (A) beträgt.

**8.** Polyesterharz-Zusammensetzung nach Anspruch 1, wobei die Polyesterharz-Zusammensetzung weiters einen Keimbildner (F) umfasst.

**9.** Polyesterharz-Zusammensetzung nach Anspruch 8, wobei der Keimbildner (F) zumindest einer, ausgewählt aus der aus Siliciumdioxid, Aluminiumdioxid, Zirconiumdioxid, Titandioxid, Wollastonit, Kaolin, Talkpuder, Glimmer, Siliciumcarbid, Ethylenbislauramid und einem Sorbitderivat bestehenden Gruppe ist oder

wobei der Gehalt des Keimbildners (F) 0,05 bis 5 Massenteile, bezogen auf 100 Massenteile des Polybutylenterephthalat-Harzes (A) beträgt.

**10.** Polyesterharz-Zusammensetzung nach Anspruch 1, wobei die Polyesterharz-Zusammensetzung unter den Bedingungen einer Schmelztemperatur von 260 °C und einer Formtemperatur von 80 °C geformt wird, um eine geformte Platte mit einer Dicke von 1 mm herzustellen, die eine Lichtdurchlässigkeit von mehr als 48 %, gemessen mit einem Spektralphotometer unter der Bedingung einer Wellenlänge von 940 nm, aufweist.

**11.** Formprodukt, das aus einer Polyesterharz-Zusammensetzung nach einem der Ansprüche 1 bis 9 besteht.

**12.** Formprodukt nach Anspruch 11, wobei das Formprodukt ein lichtdurchlässiges Material zum Laserschweißen ist.

**13.** Formprodukt nach Anspruch 11, wobei ein laserlichtdurchlässiger Abschnitt des Formprodukts eine Dicke von 3 mm oder weniger aufweist.

**Revendications**

**1.** Composition de résine de polyester, dans laquelle la composition de résine de polyester est préparée par mélange d'au moins (A) à (C) suivants :

(A) 100 parties en masse d'une résine de polytéréphtalate de butylène,
(B) de 15 à 100 parties en masse d'une résine amorphe, et
(C) de 0,01 à 5,0 parties en masse d'une résine époxy novolaque contenant une structure éther glycidylique représentée par la formule générale 1 suivante :

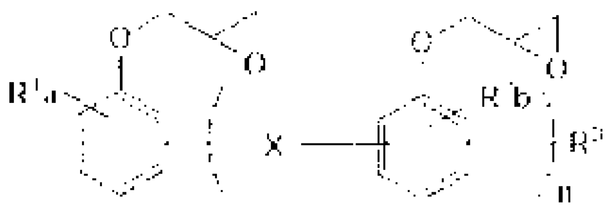

(1)

X=

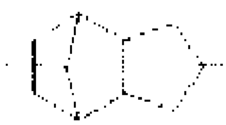

(2)

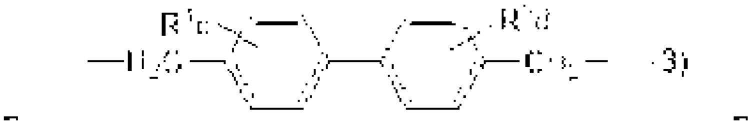

(3)

dans la formule générale 1, X indique un groupe divalent représenté par la formule générale 2 ou la formule générale 3 ; dans les formules générales 1 et 3, $R^1$, $R^2$, $R^4$ et $R^5$ sont identiques ou différents et représentent chacun indépendamment l'un quelconque parmi un groupe alkyle ayant de 1 à 8 atomes de carbone, un groupe aryle ayant de 6 à 10 atomes de carbone ou un groupe éther alkylique ayant de 1 à 8 atomes de carbone, et $R^3$ indique l'un quelconque parmi un atome d'hydrogène, un groupe alkyle ayant de 1 à 8 atomes de carbone ou un groupe aryle ayant de 6 à 10 atomes de carbone ; dans la formule générale 1, n indique une valeur supérieure à 0 mais inférieure ou égale à 10 ; et dans les formules générales 1 et 3, a, c et d représentent chacun indépendamment des nombres entiers de 0 à 4, et b est un nombre entier de 0 à 3 et en utilisant un calorimètre différentiel à balayage dans un environnement d'azote, la composition de résine de polyester est refroidie d'un état fondu à 20 °C à une vitesse de refroidissement de 20 °C/min, puis chauffée à une vitesse de montée en température de 20 °C/min, dans laquelle un pic endothermique lors de la montée en température se produit à une température supérieure à 210 °C mais inférieure à 221 °C.

2. Composition de résine de polyester selon la revendication 1, dans laquelle la résine amorphe (B) est au moins une résine choisie parmi un polycarbonate, un polyester amorphe contenant une unité téréphtalate de cyclohexane diméthylène ou un copolymère styrène/acrylonitrile.

3. Composition de résine de polyester selon la revendication 1, dans laquelle la teneur en résine époxy (C) est de 0,05 à 3 parties en masse par rapport à 100 parties en masse de résine de polytéréphtalate de butylène (A).

4. Composition de résine de polyester selon la revendication 1, dans laquelle la composition de résine de polyester comprend en outre un matériau de charge (D).

5. Composition de résine de polyester selon la revendication 4, dans laquelle le matériau de charge (D) est au moins une parmi des fibres de verre ou de fibres de carbone, ou
dans laquelle la teneur en matériau de charge (D) est de 1 à 150 parties en masse par rapport à 100 parties en masse de résine de polytéréphtalate de butylène (A).

6. Composition de résine de polyester selon la revendication 1, dans laquelle la composition de résine de polyester comprend en outre un inhibiteur de transestérification (E).

7. Composition de résine de polyester selon la revendication 6, dans laquelle l'inhibiteur de transestérification (E) est un composé représenté par la formule générale 4 suivante :

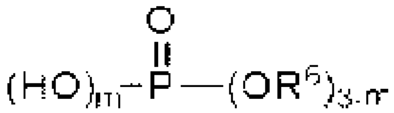

(4),

dans la formule générale 4, $R^6$ indique un groupe alkyle ayant de 1 à 30 atomes de carbone et m est égal à 1 ou 2, ou
dans laquelle la teneur en inhibiteur de transestérification (E) est de 0,025 à 0,5 partie en masse par rapport à 100 parties en masse de résine de polytéréphtalate de butylène (A).

8. Composition de résine de polyester selon la revendication 1, dans laquelle la composition de résine de polyester comprend en outre un agent de nucléation (F).

9. Composition de résine de polyester selon la revendication 8, dans laquelle l'agent de nucléation (F) est au moins un choisi dans le groupe constitué par la silice, l'alumine, la zircone, le dioxyde de titane, la wollastonite, le kaolin, la poudre de talc, le mica, le carbure de silicium, l'éthylène bislauramide ou un dérivé du sorbitol, ou
dans laquelle la teneur en agent de nucléation (F) est de 0,05 à 5 parties en masse par rapport à 100 parties en masse de résine de polytéréphtalate de butylène (A).

**10.** Composition de résine de polyester selon la revendication 1, dans laquelle la composition de résine de polyester est moulée dans des conditions de température de moulage de 260 °C et une température de moule de 80 °C pour préparer une feuille moulée ayant une épaisseur de 1 mm, qui a une transmittance supérieure à 48 %, telle que mesurée avec un spectrophotomètre dans des conditions de longueur d'onde de 940 nm.

**11.** Produit moulé, qui est fabriqué à partir de la composition de résine de polyester selon l'une quelconque des revendications 1 à 9.

**12.** Produit moulé selon la revendication 11, dans lequel le produit moulé est un matériau transmissible pour soudage laser.

**13.** Produit moulé selon la revendication 11, dans lequel une partie de transmission laser du produit moulé a une épaisseur de 3 mm ou moins.

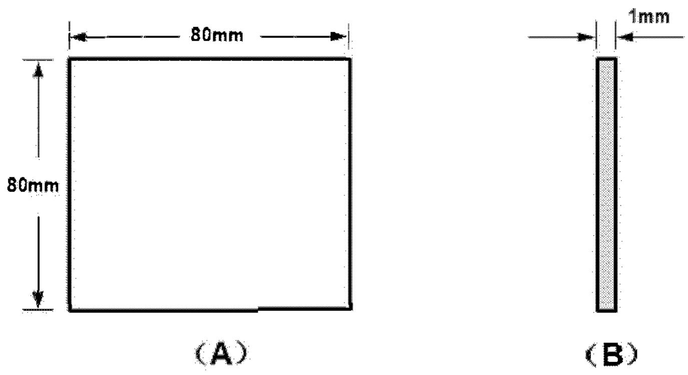


Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010070626 A
- JP 2007186584 A
- CN 1863870 A
- JP 2005336409 A
- JP 2010024396 A
- JP 2013155278 A
- CN 10778792 A
- US 20190016883 A1